# EUROPEAN PATENT SPECIFICATION

(11) **EP 1 746 762 B1**
(45) Date of publication and mention of the grant of the patent: **27.08.2008**
(21) Application number: 05291596.4
(22) Date of filing: 22.07.2005
(51) Int. Cl.: H04L 12/24

(54) **Recovery of network element configuration**
Rückgewinnung von Netzelementenkonfiguration
Récuperation de la configuration d'éléments de réseau

(43) Date of publication of application: 24.01.2007
(73) Proprietor: Alcatel Lucent, 75008 Paris (FR)
(72) Inventor: Donadio, Pasquale, 80129 Napoli (IT); Paparella, Andrea, 21052 Busto Arsizio, (Varese) (IT); Riglietti, Roberto, 20059 Vimercate (Milano) (IT)
(74) Representative: Menzietti, Domenico

(56) References cited:
- US-A1- 2004 066 741
- US-A1- 2004 083 278
- ITU-T: "Architecture for the automatically switched optical network (ASON)" G.8080/Y.1304, November 2001 (2001-11), XP002345811

## Description

### FIELD OF THE INVENTION

The present invention relates to the telecommunication field and more in particular to a method for increasing the availability of a telecommunication network. Still more in particular, the invention concerns a method for the recovery of corrupted configuration information of network elements.

### BACKGROUND OF THE INVENTION

In a telecommunication network corruption of the configuration information of a network element can occur. In fact the configuration information is stored locally to the network element into a memory (for example a nonvolatile memory like an hard disk or a volatile memory like a RAM= Random Access Memory) and corruption can occur for example for the following reasons:
- the data read from the memory can include errors;
- the memory can be affected by file system failures;
- a failure of a board mounting the memory or a failure of the network element can occur, for example for power supply problems.

Corruption of the configuration information can also occur in case of an uncorrect provisioning of the network element configuration, for example during setup of the network; this occurs, for example, if the configuration of a network element doesn't fit the configuration of other network elements directly or indirectly connected.

In both cases the consequence is corruption (errors or lost) of configuration information stored in the network element, like for example:
- software programs files;
- a database of configured cross-connections between input and output ports of the network element;
- a database of the configured connections crossing the network element;
- a database of performance monitoring functions for the configured connections crossing the network element.

The corruption can be traffic affecting and thus it is required an automatic recovery mechanism with a small recovery time, that is a small time required for restoring the correct configuration information after detection of the corruption.

The availability of a telecommunication network can be increased according to different known solutions.

A first solution requires a central network management station controlling a domain of network elements and connected (directly or indirectly) to each network element, using network management protocols like SNMP (Simple Network Management Protocol), Q3, TL1 (Transaction Language 1). The management station stores, for each network element, a backup configuration information. In case of corruption of configuration information, the network element affected by the corruption (indicated hereafter with corrupted network element) must notify the failure to the management station, which selects the backup configuration information and afterwards transmits it to the corrupted network element. Since the bandwidth available between the manager and the controlled network elements is limited, this solution has the following disadvantages:
- it requires a too long recovery time in case of transmission of a big configuration information file;
- in case of multiple corruptions at the same time, few simultaneous transmissions are possible.
Moreover, the corrupted network element could be not reachable by the management station: this can occur if there are failed intermediate network elements before the corrupted network element and the management station can reach the corrupted network element only crossing the failed network elements.

A second solution requires hardware redundancy, like for example the duplication of the network element or, at the same network element, the duplication of the memory in order to store locally a backup copy of the configuration information. In case of detection of corrupted configuration information, the redundant hardware storing the backup configuration information is selected. This solution is timely efficient and can also allow to recover from multiple corruptions at the same time, but it is too expensive because it requires duplication of hardware resources. Moreover, it has the disadvantage that in some cases the backup configuration information must be updated, because the configuration information can change. An example is configuration information indicating the active cross-connections between inputoutput ports of a network element; these cross-connections can change, because the routes of the existing connections carryed by the network can change or new connections can be configured or existing connections can be removed. Therefore it is required to update periodically the backup configuration information by transmitting updated backup configuration information from the central network management station to each controlled network element and this increases the management traffic between the central network management station and the controlled network elements (wherein the bandwidth is limited).US patent application having publication number US 2004/083278-A1 discloses that a second node is configured to store "node-specific data" of the first node so that the first node can receive the node-specific data from the second node in case the first node is resuming operation and discloses that the second node is configured when the network is started up.

US patent application having publication number US 2004/0066741-A1 discloses a process for replicating the data set stored on a failed node from a first node storing another copy of the data set to a second non-failed node.

### SUMMARY OF THE INVENTION

In view of drawbacks of the known solutions, the main object of the present invention is to provide a method for recovering corrupted configuration information of a recovering network element. This object is achieved by a method according to claim 1. The basic idea is to avoid usage of a central network management station and to share among a group of neighbor network elements the storing of configuration information at least in part correlated to the configuration information stored in the recovering network element; the group of neighbor network elements can communicate with the recovering network element such that the corrupted configuration information stored in the recovering network element can be recovered by transmitting to the recovering network element correlated configuration information stored in a neighbor network element.

A further object of the invention is to provide a method for identification of neighbor network elements; this is achieved by a method according to claim 2. Advantages of the invention are:
- to require a small recovery time, because it avoids the usage of a central network management station;
- to allow recovery of multiple corrupted configuration information at the same time;
- to allow recovery also in case of failure of the central network management station and in case of failures of intermediate network elements between the central network management station and the corrupted network element.

### BRIEF DESCRIPTION OF THE DRAWINGS

Fig.1 schematically shows the steps required for performing the invention.
Fig.2 schematically shows three groups of neighbor network elements.
Fig.3 schematically shows ports association stored at the recovering network element.
Fig.4 schematically shows configuration information stored in the neighbor network elements.
Fig.5 schematically shows a first recovered configuration information.
Fig.6 schematically shows a second recovered configuration information.

### BEST MODE FOR CARRYING OUT THE INVENTION

The recovering network element can communicate with neighbor network elements and it can be directly connected or indirectly through intermediate network elements. This is achieved, for example, by the Control Plane Elements of the new network architectures, based on the Automatically Switched Optical Network (ASON) defined in ITU-T G.8080/Y.1304 (11/2001), wherein the control plane elements (CPEs) are interconnected each other and communicate according to a signalling protocol. Each CPE controls one or more network elements, also defined Transport Plane Elements (TPE), for configuration of the connections starting from the controlled network element (also defined source network element), in order to provide a fast detection of a failure, a fast and efficient configuration of new connections within the Transport Plane, modify the connections previously set up and perform a faster restoration function providing backup connections for protecting connections affected by a failure. Various signalling protocols can fit the ASON architecture, like the Resource Reservation Protocol (RSVP) defined in RFC2205, RFC2209 and RFC2750, the Resource Reservation Protocol - Traffic Engineering (RSVP-TE) defined in RFC3209 and ITU-T G.7713.2, the Label Distribution Protocol (LDP) defined in RFC3036, the Constraint Based - Label Distribution Protocol (CR-LDP) defined in ITU-T G.7713.3 and RFC3472, the Private Network to Network Interface (PNNI) defined in ITU-T G.7713.1.

In the ASON architecture each CPE further needs to know properties of network resources for calculating the connections; this information is distributed to the CPEs through routing protocols, like Routing Information Protocol (RIP), Interior Gateway Routing Protocol (IGRP), Open Shortest Path First (OSPF, defined in RFC2328), Open Shortest Path First - Traffic Engineering (OSPF-TE, defined in RFC3639), Intermediate System to Intermediate System (IS-IS, defined in RFC1142), Exterior Gateway Protocol (EGP) and Border Gateway Protocol (BGP, defined in RFC1771).

The routing protocol can also be used for transmitting from the neighbor CPEs (that is the CPE controlling the neighbor network elements) to the recovering CPE (that is the CPE controlling the recovering network element) the indication of the configuration information stored in the neighbor CPEs, periodically or when the configuration information changes or after receiving a request from the recovering CPE.

The transmission from the neighbor to the recovering network element of the correlated configuration information stored in the neighbor network element can be performed, for example, according to the File Transfer Protocol (FTP), through the channel available between the neighbor CPEs and the recovering CPE; the bandwidth available for this channel is greater (and more reliable) than the bandwidth available between a central network management station and the controlled network elements and therefore the recovery time is smaller and also more controlled.

According to the above architecture, each CPE can communicate with each other CPE of the network and thus the recovering CPE can communicate with each other CPE of the network, that is all the other CPE can be neighbor CPEs; anyway, a subset of the possible CPEs can usually provide to the recovering CPE the correlated configuration information and therefore only a group of the possible CPEs can be selected, according to different criteria, like for example:
- a group of CPEs which are connected (directly or indirectly) to the recovering CPE through a control channel having bandwidth value greater than a defined value;
- a group of CPEs which are connected (indirectly) to the recovering CPE through a control channel having a transmission delay value smaller than a defined value;
- a group of CPEs which are connected (indirectly) to the recovering CPE through a control channel having a round trip delay smaller than a defined value;
- a group of CPEs which are connected (indirectly) to the recovering CPE through a number of intermediate CPEs smaller than a defined number;
- a group of most reliable CPEs.

The transmission delay is the time it takes for transmission of the correlated configuration information from the neighbor to the recovering CPE and depends for example on the propagation delay of the physical connections between the neighbor and recovering CPEs and on the time required by the intermediate CPEs (that is the CPEs between the neighbor and recovering CPEs) for receiving, processing, routing and transmitting the correlated configuration information towards the recovering CPE. The round trip delay is the time it takes for transmitting a request of correlated configuration information from the recovering to the neighbor CPE and for receiving an answer.

The transmission delay and the round trip delay are estimated before the transmission of the correlated configuration information, for example through the routing protocols by messages exchanged between the recovering and the neighbor CPE, and thus an estimated value of the transmission delay or of the round trip delay is stored at the recovering CPE. Reliability of a CPE can be evaluated, for example, if the CPE is protected by redundancy in case of an hardware failure.

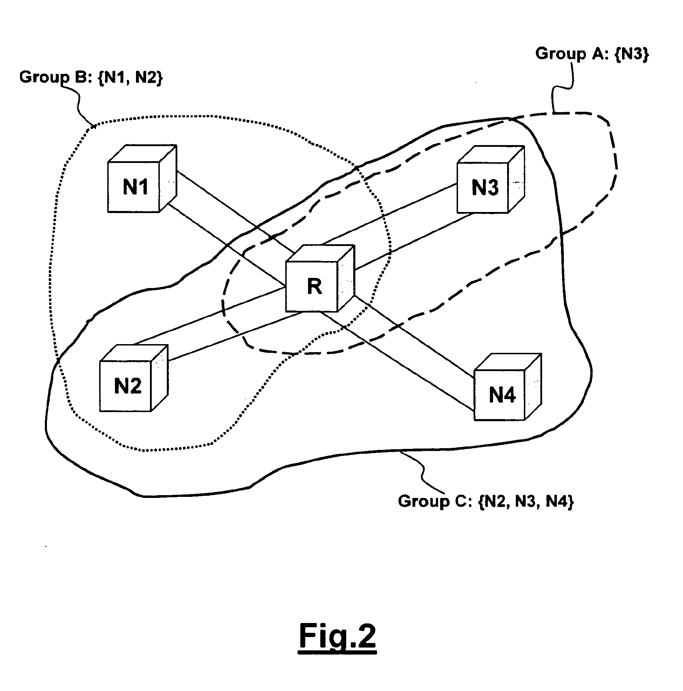

A network element usually stores different types of configuration information:
- software programs files;
- a database of configured cross-connections between input-output ports of the network element;
- a database of the configured connections crossing the network element;
- a database of performance monitoring functions for the configured connections crossing the network element.
The method can be further improved identifying different groups of neighbor network elements corresponding to the different types of configuration information. For example, Fig.2 shows three groups of neighbor network elements, indicated with Group A, Group B and Group C, wherein Group A includes N3, Group B includes N1 and N2, Group C includes N2, N3 and N4. A neighbor network element can belong to only one group or can also belong to different groups; in fact N3 belongs both to Group A and to Group C, N2 belongs both to Group B and to Group C, while N1 belongs only to Group B and N4 only to Group C.

The correlated configuration information can be transmitted from a neighbor network element to a recovering network element at pre-defined time units (for example, periodically) or can be transmitted only after a recovering network element sends a first request to the neighbor network element and the first request is received from a neighbor network element; the first request can be transmitted, for example, after detection of corruption of the configuration information stored in the recovering network element.

Corruption of the configuration information stored in the recovering network element can be detected before or after the transmission of correlated configuration information stored in the neighbor network elements.

Before the transmission, detection can be performed controlling checksum of the configuration information stored in the recovering network element and detecting an error. Afterwards, the recovering network element transmits to the neighbor network element the first request of configuration information stored in the neighbor network element and correlated to the configuration information affected by error. After receiving the first request, the neighbor network element transmits to the recovering network element an answer for indicating the correlated configuration information stored in the neighbor network element. The answer is received by the recovering network element from one or more neighbor network elements and is processed, in order to select the neighbor network element wherefrom to perform the transmission; the selection can be performed according to different rules, like for example the neighbor network element with the minimum cost to reach, wherein the cost can be evaluated at the recovering network element taking into account at least one of the following criteria:
- the most reliable neighbor network element;
- the neighbor network element connected (directly or indirectly) to the recovering network element through the channel having the largest bandwidth;
- the neighbor network element connected (indirectly) to the recovering network element through the channel having the lowest estimated transmission delay;
- the neighbor network element connected to the recovering network element through the smallest number of intermediate network elements.
The cost can be not only evaluated at the recovering network element, but can also be provided by the neighbor network elements through the first answer transmitted to the recovering network element. In this case the cost is evaluated taking into account at least one criterion related to the neighbor network element, like for example the availability of the neighbor network element. Thus the recovering network element transmits to the identified neighbor network element a second request of transmission the identified correlated configuration information. After receiving the second request, the neighbor network element transmits to the recovering network element the correlated configuration information stored in the neighbor network element. Alternatevely, the first request is received by each neighbor network element and the correlated configuration information stored in the neighbor network element is immediately transmitted to the recovering network element, which receives the correlated configuration information from each neighbor network element and selects only one.

Detection of corruption of the configuration information can also be performed after the transmission of correlated configuration information, by receiving the correlated configuration information at the recovering network element and comparing the configuration information stored in the recovering network element respect to the received correlated configuration information.

The advantage of detection before the transmission is to reduce the traffic between the neighbor network elements and the recovering network element, because the transmission is performed only from the neighbor network element having the minimim cost to reach, while the advantage of detection after the transmission is to reduce the recovering time, because the recovering network element already stores a copy of correlated configuration information received from the neighbor network elements and (after detecting the corruption) the corrupted configuration information can be immediately replaced by the received one.

In case the recovering and neighbor network elements store a great amount of configuration information, this information can be divided into different smaller parts defined "components"; each component can be for example one or more files. This division can be used in combination with the groups of neighbor network elements indicated above, that is the configuration information can be not only divided into different groups (corresponding to the different types of configuration information), but the configuration information of each group can be sub-divided into components. Thus the components of the same type of configuration information (that is a software program or a database of configured connections/cross-connections or a database of performance monitoring functions) are grouped into a "repository", which is described by an identifier indicating the specific type of configuration information. Each component of a repository is identified by a name indicating the specific functionality of the component inside the repository and by a version indicating specific functionalities of the component; for example, the name can be a string, while the version can be an integer number or a date. More specifically:
- in case of a configuration information indicating software program, the components correspond to software modules or to software packages or to plug-in;
- in case of a configuration information indicating a configuration database, the components correspond to the domains, which can be:
   - network element domain: it indicates the local network element configuration information, like for example configuration of hardware devices (ASIC= Application Specific Integrated Circuit, FPGA= Field Programmable Gate Array, microprocessor) mounted on boards of the network element;
   - connections domain: it indicates the configuration of the connections crossing the network element;
   - cross-connections domain: it indicates the configuration of the cross-connections between input-output ports of the network element ;
   - performance monitoring domain: it indicates the configuration of counters activated for monitoring of connections crossing the network element.

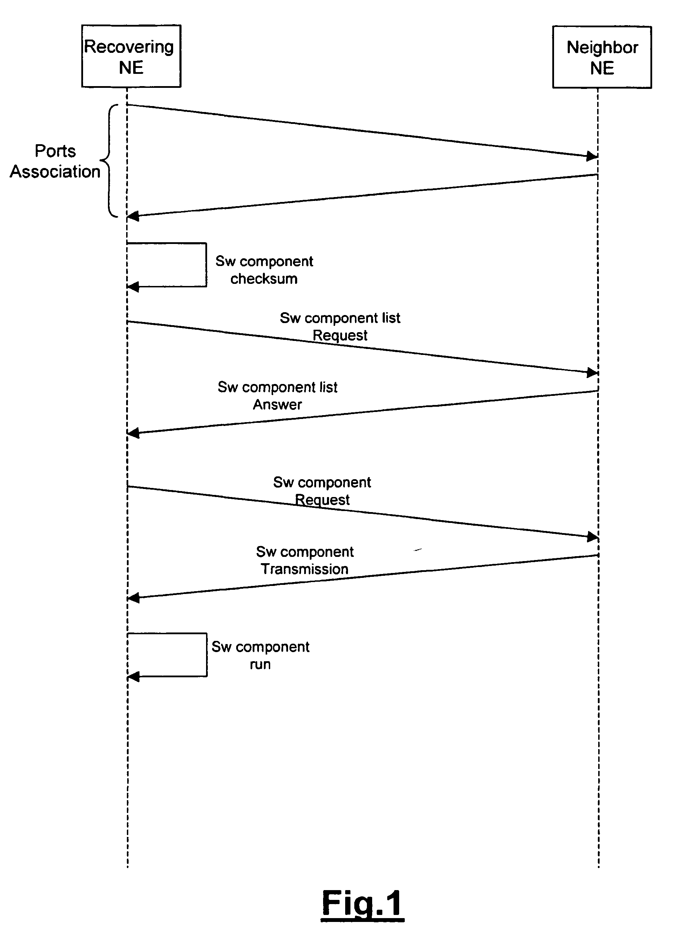

Referring to Fig.1, the steps indicated above (that is detecting corruption before the transmission, transmitting the first request, receiving the answer, selecting the neighbor network element, transmitting the second request, transmitting the correlated configuration information) can be applied specifically to software components. In this case, when detecting corruption of one software component, it's transmitted only the software component required for restoring the corrupted one and not the entire configuration information, which includes many components. This solution has the following advantages:
- to further reduce the amount of configuration information to be recovered;
- to further reduce the management traffic between the recovery and neighbor network elements;
- to further reduce the recovery time;
- to reduce the probability of corruption, because of finer granularity basis.

More specifically, the components can be transmitted from a neighbor network element to a recovering network element at pre-defined time units (for example, periodically) or can be transmitted only after a recovering network element sends a first request to the neighbor network elements and the first request is received from a neighbor network element; the first request can be transmitted, for example, after detection of corruption of a component stored at the recovering network element.

Corruption of a component stored at the recovering network element can be detected before or after the transmission of the component stored at the neighbor network elements.

Before the transmission, detection can be performed controlling checksum of the component stored in the recovering network element and detecting an error. Afterwards, the recovering network element transmits to the neighbor network elements a first request of the components stored in the neighbor network element; the first request transmitted from the recovering to the neighbor network elements can include the name and the version of the component stored at the recovering network element. This is required for identifying from the list the neighbor network elements storing a compatible component, that is a component having the same name and a compatible version, wherein the term "compatible" means that the downloaded component can replace the corrupted component. Referring to a component of a software program, this occurs for example if the version of the downloaded component is more recent than the version of the corrupted component, because a new software version can perform the same functionalities of a previous version (plus the new ones). After receiving the first request, the neighbor network elements transmit to the recovering network element an answer for indicating a list of the components stored at the neighbor network elements, including, for each component, the name and the version. The answer is received by the recovering network element from one or more neighbor network elements and is processed, in order to identify from the list the compatible components and the corresponding neighbor network elements and in order to select the neighbor network element wherefrom to perform the transmission; the selection can be performed according to rules and the criteria indicated above, that is from the neighbor network element having the minimum cost to reach, wherein the cost is calculated taking into account reliability, bandwidth, estimated transmission delay or number of intermediate network elements. Thus the recovering network element transmits to the identified neighbor network element a second request of transmission of the identified compatible component. After receiving the second request, the neighbor network element transmits to the recovering network element the compatible component stored in the neighbor network element. Alternatevely, the first request is received by each neighbor network element and the compatible component stored in the neighbor network element is immediately transmitted to the recovering network element, which receives the compatible component from each neighbor network element and selects only one.

Fig.1 shows the above steps in case of a software program divided into components, wherein are indicated the steps of:
- controlling the "Sw component checksum";
- transmitting the "Sw component list Request";
- receiving the "Sw component list Answer";
- transmitting the "Sw component Request";
- performing the "Sw component Transmission";
- performing the "Sw component run".

In case of configuration information indicating a software program, the correlation is achieved by:
- a first software program file stored at the recovering network element and adapted to run on hardware of the recovering network element;
- a second software program file stored at the neighbor network element and adapted to run on hardware of the neighbor network elements;
- the first and second software programs perform the same functionalities.
A more specific example is a software program having the functionality to perform a distributed protection scheme, in order to control hardware means to reroute the traffic from a connection affected by a failure to a backup connection. This software can run on a microprocessor (or can be performed by an ASIC or FPGA) inside or connected to the network element, in order to change the cross-connections between input and output ports of the network element. In case is required activation of this functionality at a (recovering) network element, but the corresponding stored files of the software program are corrupted (or not available), these files can be downloaded from other (neighbor) network elements connected directly or indirectly to the (recovering) network element.

In case of a a database storing configuration information, the correlation is achieved by storing in the neighbor network elements information of the configured connections crossing the recovering and the neighbor network elements. Each connection is identified uniquely in the network at least by:
- a connection identifier;
- a list of the crossed network elements;
- cross-connections between input and output ports of each network element;
and, in case of time division (TDM) or wavelength division multiplexing (WDM), preferably by:
- the time slot/ wavelength carrying the connection between two network elements;
- the time slot/ wavelength of the cross-connections between input and outputs ports of each network element.
According to prior art solutions, this information is usually stored at the central network management station but, in order to perform the invention, it is also required to be stored (in part or entirely) locally at each network element of the connection. Moreover, each network element stores information about the association of the local ports to the ports of the neighbor network elements and also stores addresses of the neighbor network elements. The addresses can be retrieved through the routing protocols (if active) indicated above (RIP, IGRP, OSPF, IS-IS, EGP, BGP), through ICMP (Internet Control Message Protocol) or Hello protocol (if the Internet Protocol stack is active) or through a dedicated management channel (if available, usually indicated with DCN= Data Communication Network). The ports can be retrieved through network management protocols, like SNMP, Q3, TL1.

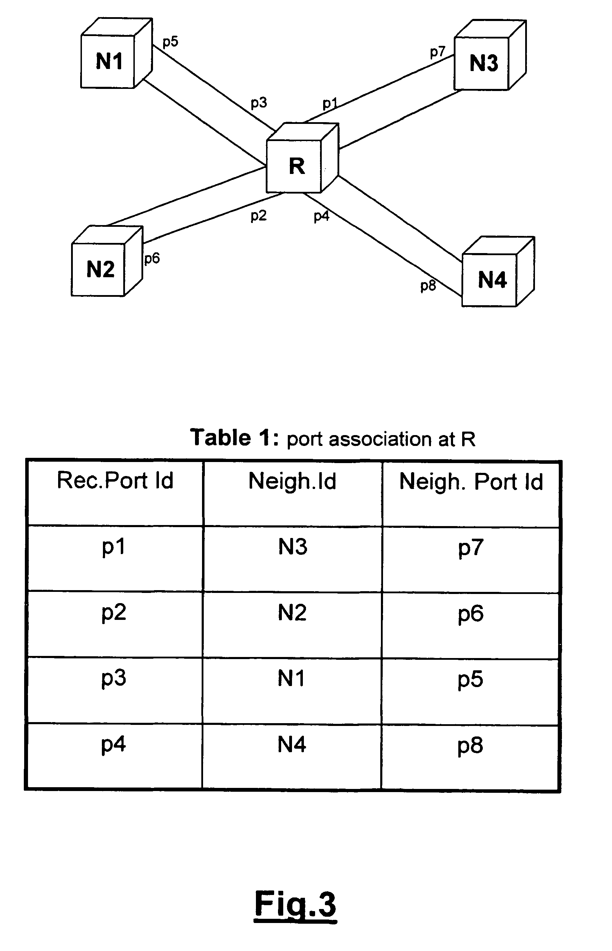

Fig.3 shows a recovering network element (indicated with R) and four neighbor network elements (indicated with N1, N2, N3 and N4) directly connected to R, while the ports are indicated with integer numbers and the network elements are identified by letters (which correspond to addresses). Fig.3 also shows Table 1, stored at the recovering network element, performing the association of the ports: the first row indicates that port p1 of the recovering network element R is connected to port p7 of the neighbor network element N3, the second p2 of R to p6 of N2, the third p3 of R to p5 of N1, the fourth p4 of R to p8 of N4.

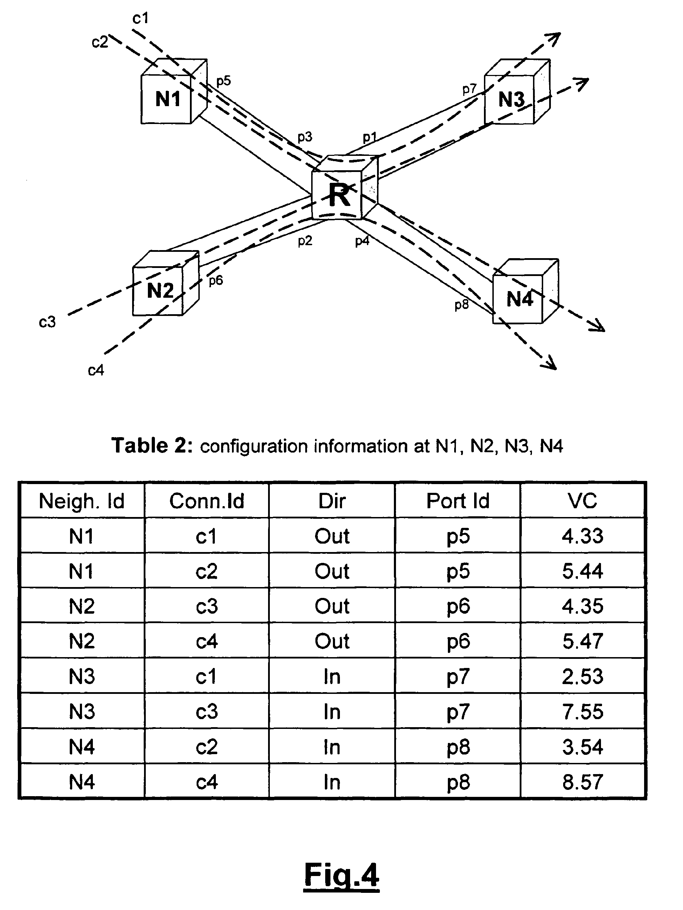

Fig.4 shows four connections (indicated with c1, c2, c3 and c4) crossing the recovering network element R and the neighbor network elements N1, N2, N3 and N4 and shows the same ports association of Fig.3. Fig.4 also shows Table 2 indicating the configuration information stored in the neighbor network elements and transmitted from the neighbor network elements to the recovering network element; more specifically, the first and second rows are the configuration information stored in N1 and transmitted from N1 to R, the third and fourth rows from N2 to R, the fifth and sixth from N3 to R, the seventh and eight from N4 to R. Each row includes the following fields:
- identifier of the neighbor network element (Neigh.Id);
- identifier of the connection (Conn.Id);
- direction of the connection (Dir): "Out" means direction from the neighbor to the recovering network element, while "In" viceversa;
- identifier of the port (Port Id) of the neighbor network element carrying the connection;
- identifier of the Virtual Channel (VC) of the connection.
In this example the VC refers to the ATM protocol and is composed of two numbers, wherein the first one indicates the VPI= Virtual Path Identifier and the second one indicates the VCI= Virtual Circuit Identifier. The same notation can be used for other protocols, like Multi Protocol Label Switching (VC is composed by PseudoWire and Tunnel), Ethernet Virtual LAN (VC is composed by Vlan Id and S-Vlan Id), Synchronous Digital Hierarchy (VC is composed by Virtual Container of Higher and Lower Order) or Synchronous Optical Network; more in general, it can indicate a time slot (in case of TDM), a wavelength (in case of WDM) or a combination of both.

For example the first row indicates that the recovering network element receives from N1 (Neigh.Id= N1) the connection c1 (Conn.Id=c1) in the direction from N1 to R (Dir=Out) on port p1 (Port Id=p1) on Virtual Channel # 4.33.

The recovering network element can restore a corrupted configuration of part of the connections from the neighbor network elements to the recovering network element by configuring the part of the connections taking into account:
- the stored information of the association of the ports of the recovering network element to the ports of the neighbor network elements;
- the configuration parameters of the part of the connections received from the neighbor network elements.

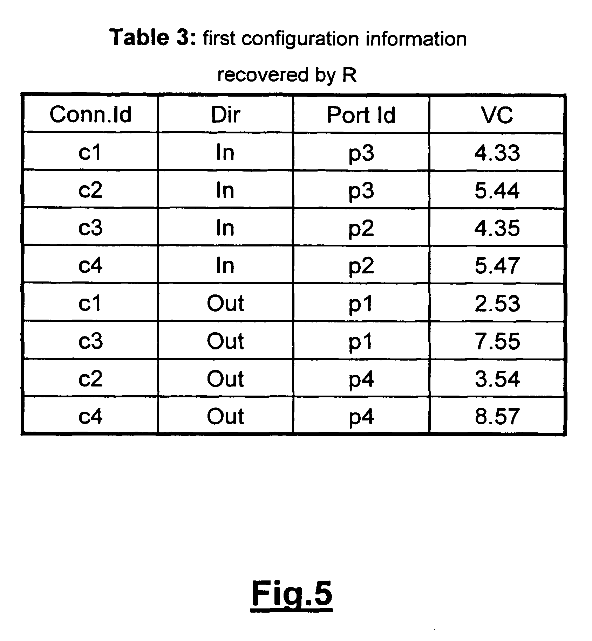

Fig.5 shows Table 3 including the same Conn.ld, Dir, Port Id and VC fields of Fig.4, but including different values which indicate the recovered configuration of the connections between N1, N2, N3, N4 and R, wherein the recovered configuration is calculated at the recovering network element R taking into account Table 2 of Fig.4 and Table 1 of Fig.3. Each row of Fig.5 is calculated from the corresponding row of Fig.4. For example, the first row of Table 3 is calculated from the first row of Table 2 according to the following steps:
- read the value (c1) of the Conn.ld field of Table 2 and copy the read value (c1) into the Conn.Id field of Table 3;
- read the value (Out) of the Dir field of Table 2, complement the value (In) and copy the complemented value into the Dir field of Table 3;
- read the value (p5) of the Port Id field of Table 2 and the corresponding Neigh.Id, calculation (according to Table 1) of the value (p3) of the Port Id corresponding to the read Neigh.Id and Port Id, copy of the calculated value into the Port Id field of Table 3;
- read the value of the VC field (4.33) of Table 2 and copy the read value (4.33) into the VC field of Table 3.
According to the first row of Table 3, R has successfully retrieved from N1 the correlated configuration information of connection c1 from N1 on port p3 on VC=4.33. The same method can be used for calculating the subsequent rows of Table 3 from the corresponding rows of Table 2. The final result is that R has retrieved the correlated configuration information of the part of the connections from N1, N2, N3, N4 to R and thus this information can be used for configuring hardware means of the network element performing the connections.

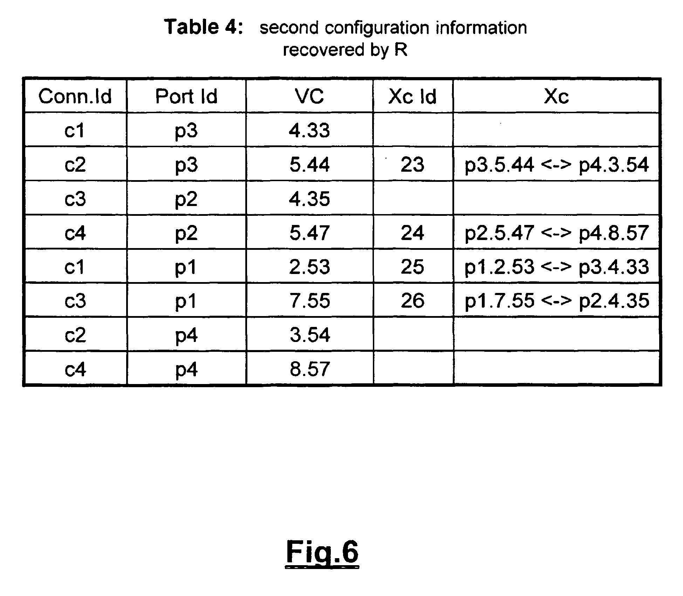

The recovering network element needs to recover not only the correlated configuration information of the external part of the connections from the neighbor to the recovering network element, but also the correlated configuration information of the internal part of the connections (also indicated with cross-connections) between input and output ports of the recovering network element. This is indicated by Table 4 of Fig.6, including the following fields:
- identifier of the connection (Conn.ld) crossing the recovering network element;
- identifier of the port (Port Id) of the recovering network element carrying the connection;
- identifier of the Virtual Channel (VC) of the connection;
- identifier of the cross-connection (Xc Id) between the input and output ports of the recovering network element;
- configuration (Xc) of the cross-connection between a Virtual Channel of an input port and a Virtual Channel of the output port.
Table 4 can be calculated directly from Table 3 or can be calculated taking into account:
- the stored information of the association of the ports of the recovering network element to the ports of the neighbor network elements;
- the configuration parameters of the part of the connections received from the neighbor network elements.
Starting the calculation from Table 3, the Xc field of the fifth row of Table 4 is calculated according to the following steps:
- read the first row of Table 3;
- selection of the row (the fifth) of Table 3 including the same value of Conn.Id (c1) of the first row and opposite value of the Dir field (Out);
- read the value of the Port Id field (p1) and of VC field (2.53) of the selected row;
- copy into the Xc field of the fifth row of Table 4 the cross-connection between value of Port Id field (p3) and corresponding VC field (4.33) of the first row and value of Port Id field (p1) and corresponding VC field (2.53) of the selected row.

The example refers to unidirectional connections, but it is possible to recover configuration of bi-directional connections, by filling the Xc field in the associated row. In the above example, we would have the Xc field of the first row filled with p3.4.33 <-> p1.2.53.

In case of a configuration information indicating a database of performance monitoring (PM) functions, the correlation is achieved storing in the neighbor network elements a list of PM counters (for maintenance or for Quality of Service purposes) for monitoring the connections crossing the recovering and neighbor network elements, and storing corresponding parameters like for example:
- type of protocol used by the connection;
- type of counter, that is free running or periodic counter (in this last case, storing also the corresponding period).
In case of corruption of PM information for a connection crossing the recovering network element, the PM information can be recovered by checking the active PM counters for the same connection crossing the neighbor network elements and activating at the recovering network element the same PM counters.

The terms "recovering network element" and "neighbor network element" are used only for explaining the invention, but in the telecommunication network there isn't any differentiation between the network elements defined in advance: this means that at a defined time unit any network element can be "neighbor" or "recovering". Therefore a network element includes both transmitting means (for performing the neighbor functionalities) adapted to transmit to another network element correlated configuration information and receiving means (for performing the recovering functionalities) adapted to receive from another network element correlated configuration. In fact, depending on the function performed:
- it is a recovering network element at a first time unit if storing a corrupted configuration information;
- it is a neighbor network element at a second time unit if providing the stored configuration information to another (recovering) network element for restoring the corrupted configuration information.
The same applies to a network element storing different types of configuration information: a network element can be (also at the same time unit) recovering respect to a first corrupted type and neighbor respect to a second safe type.

The method can be advantageously implemented on a network element, for example an Add-Drop Multiplexer, a switch or a router. The network element includes storing means adapted to store configuration information at least in part correlated to configuration information stored in another network element and transmitting means adapted to transmit to the other network element at least part of the correlated configuration information. The network element further includes receiving means adapted to receive from the other network element part of the configuration information stored in the other network element. The network element also includes processing means, for example a microprocessor (external or embedded into an ASIC/FPGA) adapted to run a software program (like C) for performing one or more steps of the inventive method. The processing means are adapted to select the other network element from possible network elements taking into account at least one of the following criteria:
- bandwidth of channel available for the transmission of the configuration information from the possible network elements to the network element;
- estimation of time required for transmission of the configuration information from the possible network elements to the network element;
- estimation of round trip delay between the network element and the possible network elements;
- number of intermediate network elements between the network element and the possible network elements;
- reliability of the possible network elements.
The storing means are further adapted to store identifier (for example the address) of the selected network element.
The processing means are also adapted to identify at least two groups of network elements taking into account at least two types of configuration information and to select the other network element from an identified group corresponding to the same type of configuration information stored in the network element.

The method can be advantageously implemented in a telecommunication network including a recovering network element and a neighbor network element. The recovering network element and the neighbor network element includes storing means adapted to store configuration information; the configuration information stored in the neighbor network element is at least in part correlated to the configuration information stored in the recovering network element. The neighbor network element includes transmitting means adapted to transmit to the recovering network element correlated configuration information stored in the neighbor network element and the recovering network element includes receiving means adapted to receive from the neighbor network element correlated configuration information. The network includes at least one further network element including storing means adapted to store configuration information; the configuration information stored in the further network element is at least in part correlated to the configuration information stored in at least one neighbor network element. The further network element includes transmitting means adapted to transmit to at least one neighbor network element corresponding correlated configuration information and includes receiving means adapted to receive from at least one neighbor network element correlated configuration information.

## Claims

1. Method for recovering corrupted configuration information stored in a recovering network element (R) of a telecommunication network, the network further including a plurality of neighbor network elements (N1, N2, N3, N4) being connected directly or indirectly to the recovering network element and being adapted to communicate with the recovering network element, the method including:
a) transmitting from the recovering network element to the plurality of neighbor network elements a first request (Sw component list Request) for configuration information (Table 2) of the plurality of neighbor network elements stored into the plurality of neighbor network elements and at least in part correlated to the configuration information stored into the recovering network element;
b) receiving at the recovering network element at least two answers (Sw component list Answer) from at least part of the plurality of neighbor network elements, the at least two answers indicating the correlated configuration information stored into the respective neighbor network element;
c) processing the at least two received answers in the recovering network element and selecting at least one neighbor network element from the at least part of the plurality of neighbor network elements;
d) transmitting from the recovering network element to the at least one selected neighbor network element a second request for at least part of the correlated configuration information stored into the at least one selected neighbor network element;
e) receiving (Sw component Transmission) at the recovering network element at least part of the correlated configuration information stored into the at least one selected neighbor network element.

2. Method according to claim 1, wherein the step of selecting the at least one neighbor network takes into account at least one of the following criteria:
- bandwidth of channel available for the transmission of the correlated configuration information from the plurality of neighbor network elements to the recovering network element;
- estimation of time required for transmission of the correlated configuration information from the plurality of neighbor network elements to the recovering network element;
- estimation of round trip delay between the recovering network element and the plurality of neighbor network elements;
- number of intermediate network elements between the recovering network element and the plurality of neighbor network elements.

3. Method according to any of claims 1 to 2, wherein the correlated configuration information is divided into at least two types of configuration information, the method further including, before the step a), the step of identifying at least two groups (Group A, Group B, Group C) of neighbor network elements from the plurality of neighbor network elements taking into account the at least two types of configuration information.

4. Method according to any of claims 1 to 3, wherein the correlated configuration information is divided into at least two components, each component being identified by a name and a version, and wherein:
- step a) includes the transmission of the first request (Sw component list Request) for indicating the name and the version of a component stored at the recovering network element;
- step b) includes the reception of the at least two answers (Sw component list Answer) for indicating:
• a list of the components stored at the plurality of neighbor network elements; and
• for each component the name and the version;
- step c) further includes the identification from the list of a compatible component having the same name and having a compatible version respect to the component stored at the recovering network element;
- step e) includes the reception of the compatible component (Sw component Transmission) from the at least one selected neighbor network element to the recovering network element.

5. Method according to claim 4, wherein the transmission of the compatible component is performed from the at least one selected neighbor network element having a minimum cost to reach, wherein the cost is calculated taking into account at least one of the following criteria:
- bandwidth of channel for the transmission from the plurality of neighbor network elements to the recovering network element;
- estimated transmission delay of channel for the transmission from the plurality of neighbor network elements to the recovering network element;
- number of intermediate network elements crossed for the transmission from the plurality of neighbor network elements to the recovering network element.

6. Method according to any of claims 1 to 5, wherein the correlated configuration information indicates at least one among:
- a software program;
- a performance monitoring function for a connection crossing the recovering network element and at least one of the plurality of neighbor network elements;
- configuration of a part of a connection crossing the recovering network element and at least one of the plurality of neighbor network elements.

7. Method according to any of claims 1 to 5, wherein the correlated configuration information indicates configuration of a part of a connection (c1, c2, c3, c4) crossing the recovering network element and the at least one selected neighbor network element, the method further including at the recovering network element, before the transmission of the first request, the step of associating ports (Ports Association) of the recovering network element (p1, p2, p3, p4) to ports of the plurality of neighbor network elements (p5, p6, p7, p8) for carrying the connection, and wherein the step e) includes the transmission of the following configuration parameters for the part of the connection:
- an identifier of the at least one crossed selected neighbor network element (N1, N2, N3, N4);
- an identifier of the connection;
- input/output direction (In, Out) of the connection;
- port identifier of the at least one crossed selected neighbor network element (p5. p6, p7, p8).

8. Method according to claim 7, wherein the step e) further includes the following steps:
- receiving at the recovering network element the configuration parameters of the part of the connection;
- configuring the part of the connection between the at least one selected neighbor network element and the recovering network element taking into account the received configuration parameters and the association of the ports.

9. Method according to claim 8, further including the following step:
- configuring the part of the connection between the input and the output ports of the recovering network element taking into account the received configuration parameters and the association of the ports.

10. Method according to any of claims 1 to 3, further including, before the step a), the following step:
- detecting corruption of the configuration information stored in the recovering network element by detecting checksum error (Sw component checksum) of the configuration information stored in the recovering network element.

11. Method according to any of claims 1 to 3, wherein step e) further includes the following steps:
- receiving at the recovering network element the correlated configuration information;
- detecting corruption of the configuration information stored in the recovering network element by comparing the configuration information stored in the recovering network element respect to the received correlated configuration information.

12. Network element (N1, N2, N3, N4) including:
- storing means adapted to store configuration information (Table 2) of the network element at least in part correlated to configuration information stored into another network element (R) being connected directly or indirectly to the network element;
- receiving means adapted to receive from the other network element (R) a first request (Sw component list Request) for the configuration information stored into the network element and at least in part correlated to the configuration information (Table 2) stored into the other network element;
- transmitting means adapted to transmit to the other network element an answer (Sw component list Answer) for indicating the correlated configuration information stored into the network element;
wherein the receiving means are further adapted to receive from the other network element a second request for at least part of the correlated configuration information stored into the network element, and
wherein the transmitting means are further adapted to transmit to the other network element at least part of the correlated configuration information stored into the network element.

13. Network element (R) including:
- storing means adapted to store configuration information;
- transmitting means adapted to transmit to a plurality of neighbor network elements a first request (Sw component list Request) for configuration information (Table 2) of the plurality of neighbor network elements stored into the plurality of neighbor network elements and at least in part correlated to the configuration information stored into the network element, wherein the plurality of neighbor network elements (N1, N2, N3, N4) are connected directly or indirectly to the network element;
- receiving means adapted to receive at least two answers (Sw component list Answer) from at least part of the plurality of neighbor network elements, the at least two answers indicating the correlated configuration information stored into the respective neighbor network element;
- processing means adapted to process the at least two received answers and to select at least one neighbor network element from the at least part of the plurality of neighbor network elements;
wherein the transmitting means are further adapted to transmit to the at least one selected neighbor network element a second request for at least part of the correlated configuration information stored into the at least one selected neighbor network element, and
wherein the receiving means are further adapted to receive at least part of the correlated configuration information stored in the at least one selected neighbor network element.

14. Network element (R) according to claim 13, wherein the processing means are adapted to select the at least one neighbor network element taking into account at least one of the following criteria:
- bandwidth of channel available for the transmission of the configuration information from the plurality of network elements to the network element;
- estimation of time required for transmission of the configuration information from the plurality of network elements to the network element;
- estimation of round trip delay between the network element and the plurality of network elements;
- number of intermediate network elements between the network element and the plurality of network elements;
wherein the storing means are further adapted to store identifier of the selected network element.

15. Network element (R) according to claim 13, wherein the processing means are adapted to identify at least two groups (Group A, Group B, Group C) of the plurality of network elements taking into account at least two types of configuration information and to select the at least one network element from an identified group corresponding to the same type of configuration information stored in the network element.

16. Telecommunication network including at least one recovering network element (R) according to any of claims 13 to 15 and at least one neighbor network element (N1, N2, N3, N4) according to claim 12.

## Patentansprüche

1. Verfahren zur Rückgewinnung von in einem Rückgewinnungs-Netzwerkelement (R) eines Telekommunikationsnetzwerks gespeicherten korrupten Konfigurationsinformationen, wobei das Netzwerk weiterhin eine Vielzahl von benachbarten Netzwerkelementen (N1, N2, N3, N4) umfasst, welche direkt oder indirekt mit dem Rückgewinnungs-Netzwerkelement verbunden und fähig sind, mit dem Rückgewinnungs-Netwerkelement zu kommunizieren, wobei das Verfahren umfasst:
a) Senden, von dem Rückgewinnungs-Netzwerkelement an die Vielzahl von benachbarten Netzwerkelementen, einer ersten Anfrage (Sw component list Request) für Konfigurationsinformationen (Tabelle 2) über die Vielzahl von benachbarten Nefzwerkelemente, welche mindestens teilweise mit den im Rückgewinnungs-Netzwerkelement gespeicherten Konfigurationsinformationen korrelieren;
b) Empfangen, am Rückgewinnungs-Netzwerkelement, von mindestens zwei Antworten (Sw component list Answer) von mindestens einem Teil der Vielzahl von benachbarten Netzwerkelementen, wobei die besagten mindestens zwei Antworten die in dem entsprechenden benachbarten Netzwerkelement gespeicherten korrelierten Konfigurationsinformationen angeben;
c) Verarbeiten der mindestens zwei empfangenen Antworten im Rückgewinnungs-Netzwerkelement und Auswählen von mindestens einem benachbarten Netzwerkelement aus mindestens einem Teil der Vielzahl von benachbarten Netzwerkelementen;
d) Übertragen, von dem Rückgewinnungs-Netzwerkelement an das mindestens eine ausgewählte benachbarte Netzwerkelement, einer zweiten Anfrage für mindestens einen Teil der korrelierten, in dem mindestens einen ausgewählten benachbarten Netzwerkelement gespeicherten Konfigurationsinformationen:
e) Empfangen (Sw component Transmission), am Rückgewinnungs-Netzwerkelement, von mindestens einem Teil der korrelierten, in dem mindestens einen ausgewählten benachbarten Netzwerkelement gespeicherten Konfigurationsinformationen;

2. Verfahren nach Anspruch 1, wobei der Schritt der Auswahl des mindestens einen benachbarten Netzwerks mindestens eines der folgenden Kriterien berücksichtigt:
- Verfügbare Kanalbandbreite für die Übertragung der korrelierten Konfigurationsinformation von der Vielzahl von benachbarten Netzwerkelementen an das Rückgewinnungs-Netzwerkelement;
- Schätzung der für das Senden der korrelierten Konfigurationsinformationen von der Vielzahl von benachbarten Netzwerkelementen an das Rückgewinnungs-Netzwerkelement erforderlichen Übertragungszeit;
- Schätzung des Round Trip Delay zwischen dem Rückgewinnungs-Netzwerkelement und der Vielzahl von benachbarten Netwerkelementen;
- Anzahl der zwischen dem Rückgewinnungs-Netzwerkelement und der Vielzahl von benachbarten Netzwerkelementen liegenden Netzwerkelemente.

3. Verfahren nach einem beliebigen der Ansprüche 1 bis 2, wobei die korrelierten Konfigurationsinformationen in mindestens zwei Konfigurationsinformations-Typen unterteilt sind, wobei das Verfahren weiterhin, vor dem Schritt a), den Schritt des Identifizierens von mindestens zwei Gruppen (Group A, Group B, Group C) von benachbarten Netzwarkelementen aus der Vielzahl der benachbarten Netzwerkelement umfasst, wobei mindestens zwei Konfigurationsinformations-Typen berücksichtigt werden.

4. Verfahren nach einem beliebigen der Ansprüche 1 bis 3, wobei die korrelierten Konfigurationsinformationen in mindestens zwei Komponenten geteilt wird, wobei jede Komponente mit einem Namen und einer Version identifiziert wird, und wobei:
Schritt a) die Übertragung der ersten Anfrage (Sw component list Request) zur Angabe des Namens und der Version einer an dem Rückgewinnungs-Netzwerkelement gespeicherten Komponente umfasst;
- Schritt b) den Empfang von mindestens zwei Antworten (Sw component list Answer) umfasst, um anzugeben:
• eine Liste der an der Vielzahl von benachbarten Netzwerkelementen gespeicherten Komponenten; und
• den Namen und die Version für jede Komponente;
- Schritt c) weiterhin die Identifikation aus der Liste einer kompatiblen Komponente mit dem gleichen Namen und mit einer in Bezug auf die an dem Rückgewinnungs-Netzwerkelement gespeicherte Komponente kompatiblen Version umfasst;
- Schritt e) den Empfang der kompatiblen Komponente (Sw component Transmission) von dem mindestens einen ausgewählten benachbarten Netzwerkalement an das Rückgewinnungs-Netzwerkelement umfasst.

5. Verfahren nach Anspruch 4, wobei die Übertragung der kompatiblen Komponente von dem mindestens einen ausgewählten benachbarten Netzwerkelement, welcher die geringsten Kosten erfordert, durchgeführt wird, wobei die Kosten unter Berücksichtigung von mindestens einem der folgenden Kriterium errechnet werden:
- Bandbreite des Kanals für die Übertragung von der Vielzahl von benachbarten Netzwerkelementen an das Rückgewinnungs-Netzwerkelement;
- geschätzte Übertragungszeit des Kanals für die Übertragung von der Vielzahl von benachbarten Netzwerkelementen an das Rückgewinnungs-Netzwerkelement;
- Anzahl der dazwischen liegenden Netzwerkelemente, welche für die Übertragung von der Vielzahl von benachbarten Netzwerkelementen an das Rückgewinnungs-Netzwerkelement durchlaufen werden.

6. Verfahren nach einem beliebigen der Ansprüche 1 bis 5, wobei die korrelierten Konfigurationsinformationen mindestens angeben:
- Ein Software-Programm;
- Eine Leistungsüberwachungs-Funktion für eine Verbindung, welche das Rückgewinnungs-Netzwerkelement und mindestens eines der Vielzahl von benachbarten Netzwerkelementen durchläuft;
- Konfiguration eines Teils einer Verbindung, welcher das Rückgewinnungs-Netzwerkelement und mindestens eines der Vielzahl von benachbarten Netzwerkelementen durchläuft.

7. Verfahren nach einem beliebigen der Ansprüche 1 bis 5, wobei die korrelierten Konfigurationsinformationen die Konfiguration eines Teils einer Verbindung (c1, c2, c3, c4), welcher das Rückgewinnungs-Netzwerkelement und mindestens eines der Vielzahl von benachbarten Netzwerkelementen durchläuft, angeben, wobei das Verfahren weiterhin am Rückgewinnungs-Netzwerkelement, vor der Übertragung der ersten Anfrage, den Schritt der Zuordnung von Ports (Ports Association) des Rückgewinnungs-Netzwerkelements (p1, p2, p3, p4) zu Ports der Vielzahl von benachbarten Netzwerkelementen (p5, p6, p7, p8) zum Befördern der Verbindung umfasst, und wobei der Schritt e) die Übertragung der folgenden Konfigurationsparameter des Teils der Verbindung umfasst:
- eine Kennung des mindestens einen durchlaufenen ausgewählten benachbarten Netzwerkelements (N1, N2, N3, N4);
- eine Kennung der Verbindung;
- Eingangs-/Ausgangsrichtung (In, Out) der Verbindung;
- Portkennung des mindestens einen durchlaufenen ausgewählten benachbarten Netzwerkelements (p5, p6, p7, p8).

8. Verfahren nach Anspruch 7, wobei der Schritt e) weiterhin die folgenden Schritte umfasst:
- Empfangen der Konfigurationsparameter des Teils der Verbindung am Rückgewinnungs-Netzwerkelement;
- Konfigurieren des Teils der Verbindung zwischen dem mindestens einen ausgewählten benachbarten Netzwerkelement und dem Rückgewinnungs-Netzwerkelement unter Berücksichtigung der empfangenen Konfigurationsparameter und der Zuordnung der Ports.

9. Verfahren nach Anspruch 8, weiterhin den folgenden Schritt umfassend:
- Konfigurieren des Teils der Verbindung zwischen den Eingangs- und Ausgangs-Ports des Rückgewinnungs-Netzwerkelements unter Berücksichtigung der empfangenen Konfigurationsparameter und der Zuordnung der Ports.

10. Verfahren nach einem beliebigen der Ansprüche 1 bis 3, weiterhin, vor Schritt a), den folgenden Schritt umfassend:
- Erkennen einer Korruption der in dem Rückgewinnungs-Netzwerkelement gespeicherten Konfigurationsinformationen durch Erkennen des Fehlers Checksum Error (Sw component checksum) der im Rückgewinnungs-Netzwerkelement gespeicherten Konfigurationsinformationen.

11. Verfahren nach einem beliebigen der Ansprüche 1 bis 3, wobei Schritt e) weiterhin die folgenden Schritte umfasst:
- Empfangen der korrelierten Konfigurationsinformationen am Rückgewinnungs-Netzwerkelement;
- Erkennen einer Korruption der in dem Rückgewinnungs-Netzwerkelement gespeicherten Konfigurationsinformationen durch Vergleichen der im Rückgewinnungs-Netzwerkelement gespeicherten Konfigurationsinformationen mit den empfangenen korrelierten Konfigurationsinformationen.

12. Netzwerkelement (N1, N2, N3, N4), umfassend:
- Speichermittel, welche fähig sind, Konfigurationsinformationen (Tabelle 2) des Netzwerkelements, welche mindestens teilweise mit den in einem anderen, direkt oder indirekt mit dem Netzwerkelement verbundenen Netzwerkelement (7) gespeicherten Konfigurationsinformationen korreliert sind, zu speichern;
- Empfangsmittel, welche fähig sind, von dem anderen Netzwerkelement (R) eine erste Anfrage (Sw component list Request) für die Konfigurationsinformationen, welche in dem Netzwerkelement gespeichert und mindestens teilweise mit den Konfigurationsinformationen (Tabelle 2), welche in dem anderen Netzwerkelement gespeichert sind, korreliert sind, zu empfangen;
- Übertragungsmittel, welche fähig sind, eine Antwort (Sw component list Answer) zur Angabe der korrelierten, in dem Netzwerk gespeicherten Konfigurationsinformationen an das andere Netzwerkelement zu senden;
wobei die Empfangsmittel weiterhin fähig sind, von dem anderen Netzwerkelement eine zweite Anfrage für mindestens einen Teil der im Netzwerkelement gespeicherten korrelierten Konfigurationsinformationen zu empfangen, und
wobei die Übertragungsmittel weiterhin fähig sind, mindestens einen Teil der im Netzwerkelement gespeicherten korrelierten Konfigurationsinformationen an das andere Netzwerkelement zu senden.

13. Netzwerkelement (R), umfassend:
- Speichermittel, welche fähig sind, Konfigurationsinformationen zu speichern;
- Übertragungsmittel, welche fähig sind, an eine Vielzahl von benachbarten Netzwerkelementen eine erste Anfrage (Sw component list Request) für Konfigurationsinformationen (Tabelle 2) der Vielzahl von benachbarten Netzwerkelemente, welche in der Vielzahl von benachbarten Netzwerkelementen gespeichert und mindestens teilweise mit den in dem Netzwerkelement gespeicherten Konfigurationsinformationen korreliert sind, zu senden, wobei die Vielzahl von benachbarten Netzwerkelementen (N1, N2, N3, N4) direkt oder indirekt mit dem Netzwerkelement verbunden sind;
- Empfangsmittel, welche fähig sind, mindestens zwei Antworten (Sw component list Answer) von mindestens einem Teil der Vielzahl von benachbarten Netzwerkelementen zu empfangen, wobei die mindestens zwei Antworten die korrelierten, in dem entsprechenden benachbarten Netzwerkelement gespeicherten Konfigurationsinformationen angeben;
- Verarbeitungsmittel, welche fähig sind, die mindestens zwei Antworten zu verarbeiten und mindestens ein Netzwerkelement aus mindestens einem Teil der Vielzahl von benachbarten Netzwerkelementen auszuwählen;
wobei die Übertragungsmittel weiterhin fähig sind, an das mindestens eine ausgewählte benachbarte Netzwerkelement eine zweite Anfrage für mindestens einen Teil der in dem mindestens einen ausgewählten benachbarten Netzwerkelement gespeicherten korrelierten Konfigurationsinformationen zu senden, und
wobei die Empfangsmittel weiterhin fähig sind, mindestens einen Teil der in dem mindestens einen ausgewählten benachbarten Netzwerkelement gespeicherten korrelierten Konfigurationsinformationen zu empfangen.

14. Netzwerkelement (R) nach Anspruch 13, wobei die Verarbeitungsmittel fähig sind, das mindestens eine benachbarte Netzwerkelemente unter Berücksichtigung von mindestens einem der folgenden Kriterien auszuwählen:
- verfügbare Kanalbandbreite für die Übertragung der Konfigurationsinformationen von der Vielzahl von Netzwerkelementen an das Netzwerkelement;
- Schätzung der für das Senden der Konfigurationsinformationen von der Vielzahl von Netzwerkelementen an das Netzwerkelement erforderlichen Übertragungszeit;
- Schätzung des Round Trip Delay zwischen dem Netzwerkelement und der Vielzahl von Netzwerkelementen;
- Anzahl der zwischen dem Netzwerkelement und der Vielzahl von Netzwerkelementen liegenden Netzwerkelemente;
wobei die Speichermittel weiterhin fähig sind, die Kennung des ausgewählten Netzwerkelements zu speichern.

15. Netzwerkelement (R) nach Anspruch 13, wobei die Verarbeitungsmittel fähig sind, mindestens zwei Gruppen (Group A, Group B, Group C) aus der Vielzahl von Netzwerkelementen unter Berücksichtigung von mindestens zwei Konfigurationsinformationen-Typen zu identifizieren und das mindestens eine Netzwerkelement aus einer identifizierten Gruppe auszuwählen, welches demselben in dem Netzwerkelement gespeicherten Konfigurationsinformationen-Typ entspricht.

16. Telekommunikationsnetzwerk, welches mindestens ein Rückgewinnungs-Netzwerkelement (R) nach einem beliebigen der Ansprüche 13 bis 15 und mindestens ein benachbartes Netzwerkelement (N1, N2, N3, N4) nach Anspruch 12 umfasst.

## Revendications

1. Procédé pour récupérer des informations de configuration altérées stockées dans un élément de réseau de récupération (R) d'un réseau de télécommunication, le réseau comprenant en plus une pluralité d'éléments de réseau voisins (N1, N2, N3. N4) connectés directement ou indirectement à l'élément de réseau de récupération et conçus pour communiquer avec l'élément de réseau de récupération, le procédé comprenant :
a) Émission depuis l'élément de réseau de récupération vers la pluralité d'éléments de réseau voisins d'une première demande (Demande de liste de composantes logicielles) d'informations de configuration (tableau 2) de la pluralité d'éléments de réseau voisins stockées dans la pluralité d'éléments de réseau voisins et au moins en partie corrélées avec les informations de configuration stockées dans l'élément de réseau de récupération ;
b) Réception au niveau de l'élément de réseau de récupération d'au moins deux réponses (Réponse de liste de composantes logicielles) de la part d'au moins une partie de la pluralité d'éléments de réseau voisins, les au moins deux réponses indiquant les informations de configuration corrélées stockées dans les éléments de réseau voisins respectifs ;
c) Traitement des au moins deux réponses reçues dans l'élément de réseau de récupération et sélection d'au moins un élément de réseau voisin de l'au moins une partie de la pluralité d'éléments de réseau voisins ;
d) Émission depuis l'élément de réseau de récupération vers l'au moins un élément de réseau voisin sélectionné d'une deuxième demande pour au moins une partie des informations de configuration corrélées stockées dans l'au moins un élément de réseau voisin sélectionné ;
e) Réception (Émission de la composante logicielle) au niveau de l'élément de réseau de récupération d'au moins une partie des informations de configuration corrélées stockées dans l'au moins un élément de réseau voisin sélectionné.

2. Procédé selon la revendication 1, l'étape de sélection d'au moins un élément de réseau voisin tenant compte d'au moins l'un des critères suivants :
- bande passante du canal disponible pour l'émission des informations de configuration corrélées depuis la pluralité d'éléments de réseau voisins vers l'élément de réseau de récupération ;
- estimation du temps nécessaire pour l'émission des informations de configuration corrélées depuis la pluralité d'éléments de réseau voisins vers l'élément de réseau de récupération ;
- estimation du retard aller/retour entre l'élément de réseau de récupération et la pluralité d'éléments de réseau voisins ;
- nombre d'éléments de réseau intermédiaires entre l'élément de réseau de récupération et la pluralité d'éléments de réseau voisins.

3. Procédé selon l'une quelconque des revendications 1 à 2, les informations de configuration corrélées étant divisées en au moins deux types d'informations de configuration, le procédé comprenant en plus, avant l'étape a), l'étape d'identification d'au moins deux groupes (Groupe A, Groupe B, Groupe C) d'éléments de réseau voisins parmi la pluralité d'éléments de réseau voisins en tenant compte des aux moins deux types d'informations de configuration.

4. Procédé selon l'une quelconque des revendications 1 à 3, les informations de configuration corrélées étant divisées en au moins deux composantes, chaque composante étant identifiée par un nom et une version, et :
- l'étape a) comprenant l'émission de la première demande (Demande de liste de composantes logicielles) pour indiquer le nom et la version d'une composante stockée au niveau de l'élément de réseau de récupération ;
- l'étape b) comprenant la réception des au moins deux réponses (Réponse de liste de composantes logicielles) pour indiquer :
* une liste des composantes stockées au niveau de la pluralité d'éléments de réseau voisins ; et
* pour chaque composante, le nom et la version ;
- l'étape c) comprenant en plus l'identification parmi la liste d'une composante compatible ayant le même nom et ayant une version compatible en considération de la composante stockée au niveau de l'élément de réseau de récupération ;
- l'étape e) comprenant la réception de la composante compatible (Émission de la composante logicielle) depuis l'au moins un élément de réseau voisin sélectionné vers l'élément de réseau de récupération.

5. Procédé selon la revendication 4, l'émission de la composante compatible étant effectuée depuis l'au moins un élément de réseau voisin sélectionné ayant un coût de jonction minimum, le coût étant calculé en tenant compte au moins l'un des critères suivants :
- bande passante du canal disponible pour l'émission depuis la pluralité d'éléments de réseau voisins vers l'élément de réseau de récupération ;
- retard d'émission estimé du canal pour l'émission depuis la pluralité d'éléments de réseau voisins vers l'élément de réseau de récupération ;
- nombre d'éléments de réseau intermédiaires croisés pour l'émission depuis la pluralité d'éléments de réseau voisins vers l'élément de réseau de récupération.

6. Procédé selon l'une quelconque des revendications 1 à 5, les informations de configuration corrélées indiquant au moins l'une des informations suivantes :
- un programme logiciel ;
- une fonction de surveillance des performances pour une connexion croisant l'élément de réseau de récupération et au moins l'un de la pluralité d'éléments de réseau voisins ;
- la configuration d'une partie d'une connexion croisant l'élément de réseau de récupération et au moins l'un de la pluralité d'éléments de réseau voisins.

7. Procédé selon l'une quelconque des revendications 1 à 5, les informations de configuration corrélées indiquant la configuration d'une partie d'une connexion (c1, c2, c3, c4) croisant l'élément de réseau de récupération et l'au moins un élément de réseau voisin sélectionné, le procédé comprenant en plus au niveau de l'élément de réseau de récupération, avant l'émission de la première demande, l'étape d'association des ports (Association des ports) de l'élément de réseau de récupération (p1, p2, p3, p4) aux ports de la pluralité d'éléments de réseau voisins (p5, p6, p7, p8) pour transporter la connexion et l'étape e) comprenant l'émission des paramètres de configuration suivants pour la partie de la connexion :
- un identifiant de l'au moins un élément de réseau voisin sélectionné croisé (N1. N2, N3, N4) ;
- un identifiant de la connexion ;
- le sens d'entrée/sortie (Entrée, Sortie) de la connexion ;
- l'identifiant de port de l'au moins un élément de réseau voisin sélectionné croisé (p5, p6, p7, p8).

8. Procédé selon la revendication 7, l'étape e) comprenant en plus les étapes suivantes :
- réception au niveau de l'élément de réseau de récupération des paramètres de configuration de la partie de la connexion ;
- configuration de la partie de la connexion entre l'au moins un élément de réseau voisin sélectionné et l'élément de réseau de récupération en tenant compte des paramètres de configuration reçus et de l'association des ports.

9. Procédé selon la revendication 8, comprenant en plus l'étape suivante :
- configuration de la partie de la connexion entre les ports d'entrée et de sortie de l'élément de réseau de récupération en tenant compte des paramètres de configuration reçus et de l'association des ports.

10. Procédé selon l'une quelconque des revendications 1 à 3, comprenant l'étape suivante avant l'étape a) :
- détection de l'altération des informations de configuration stockées dans l'élément de réseau de récupération en détectant une erreur de total de contrôle (Total de contrôle de la composante logicielle) des informations de configuration stockées dans l'élément de réseau de récupération.

11. Procédé selon l'une quelconque des revendications 1 à 3, l'étape e) comprenant en plus l'étape suivante :
- réception des informations de configuration corrélées au niveau de l'élément de réseau de récupération ;
- détection de l'altération des informations de configuration stockées dans l'élément de réseau de récupération en comparant les informations de configuration stockées dans l'élément de réseau de récupération avec les informations de configuration corrélées reçues.

12. Élément de réseau (N1, N2, N3, N4) comprenant :
- des moyens de stockage conçus pour stocker des informations de configuration (tableau 2) de l'élément de réseau au moins partiellement corrélées avec les informations de configuration stockées dans un autre élément de réseau (R) connecté directement ou indirectement à l'élément de réseau :
- des moyens de réception conçus pour recevoir de la part de l'autre élément de réseau (R) une première demande (Demande de liste de composantes logicielles) pour les Informations de configuration stockés dans l'élément de réseau et au moins partiellement corrélées avec les informations de configuration (tableau 2) stockées dans l'autre élément de réseau ;
- des moyens d'émission conçus pour émettre vers l'autre élément de réseau une réponse (Réponse de liste de composantes logicielles) pour indiquer les informations de configuration corrélées stockées dans l'élément de réseau ;
les moyens de réception étant en plus conçus pour recevoir de la part de l'autre élément de réseau une deuxième demande pour au moins une partie des informations de configuration corrélées stockées dans l'élément de réseau et
les moyens d'émission étant en plus conçus pour émettre vers l'autre élément de réseau au moins une partie des informations de configuration corrélées stockées dans l'élément de réseau.

13. Élément de réseau (R) comprenant :
- des moyens de stockage conçus pour stocker des informations de configuration ;
- des moyens d'émission conçus pour émettre vers une pluralité d'éléments de réseau voisins une première demande (Demande de liste de composantes logicielles) d'informations de configuration (tableau 2) de la pluralité d'éléments de réseau voisins stockées dans la pluralité d'éléments de réseau voisins et au moins en partie corrélées avec les informations de configuration stockées dans l'élément de réseau, la pluralité d'éléments de réseau voisins (N1, N2, N3, N43) étant connectée directement ou indirectement à l'élément de réseau ;
- des moyens de réception conçus pour recevoir au moins deux réponses (Réponse de liste de composantes logicielles) de la part d'au moins une partie de la pluralité d'éléments de réseau voisins, les au moins deux réponses indiquant les informations de configuration corrélées stockées dans les éléments de réseau voisins respectifs ;
- des moyens de traitement conçus pour traiter les au moins deux réponses reçues et pour sélectionner au moins un élément de réseau voisin de l'au moins une partie de la pluralité d'éléments de réseau voisins ; les moyens d'émission étant en plus conçus pour émettre vers l'au moins un élément de réseau voisin sélectionné une deuxième demande pour au moins une partie des informations de configuration corrélées stockées dans l'au moins un élément de réseau voisin sélectionné ;
les moyens de réception étant en plus conçus pour recevoir au moins une partie des informations de configuration corrélées stockées dans l'au moins un élément de réseau voisin sélectionné.

14. Élément de réseau (R) selon la revendication 13, les moyens de traitement étant conçus pour sélectionner l'au moins un élément de réseau voisin en tenant compte d'au moins l'un des critères suivants :
- bande passante du canal disponible pour l'émission des informations de configuration corrélées depuis la pluralité d'éléments de réseau vers l'élément de réseau ;
- estimation du temps nécessaire pour l'émission des informations de configuration depuis la pluralité d'éléments de réseau vers l'élément de réseau ;
- estimation du retard aller/retour entre l'élément de réseau et la pluralité d'éléments de réseau ;
- nombre d'éléments de réseau intermédiaires entre l'élément de réseau et la pluralité d'éléments de réseau ;
les moyens de stockage étant en plus conçus pour stocker l'identifiant de l'élément de réseau sélectionné.

15. Élément de réseau (R) selon la revendication 13, les moyens de traitement étant conçus pour sélectionner au moins deux groupes (Groupe A, Groupe B, Groupe C) parmi la pluralité d'éléments de réseau en tenant compte des au moins deux types d'informations de configuration et pour sélectionner l'au moins un élément de réseau parmi un groupe identifié correspondant au même type d'informations de configuration stockées dans l'élément de réseau.

16. Réseau de télécommunication comprenant au moins un élément de réseau de récupération (R) selon l'une quelconque des revendications 13 à 15 et au moins un élément de réseau voisin (N1, N2, N3, N4) selon la revendication 12.
